# EUROPEAN PATENT APPLICATION

(11) **EP 4 598 120 A1**
(43) Date of publication of application: **06.08.2025**
(21) Application number: 23886144.7
(22) Date of filing: 27.10.2023
(51) Int. Cl.: H04W 36/00, H04W 36/08, H04W 36/38, H04W 16/28

(54) **METHOD AND DEVICE FOR TRANSFERRING CONFIGURATION INFORMATION OF CANDIDATE CELLS FOR L1/L2-BASED MOBILITY SUPPORT IN NEXT-GENERATION COMMUNICATION SYSTEM**

(30) Priority: 01.11.2022 KR 20220143913
(71) Applicant: Samsung Electronics Co., Ltd., Suwon-si, Gyeonggi-do 16677 (KR)
(72) Inventor: JIN, Seungri, Suwon-si, Gyeonggi-do 16677 (KR); HWANG, June, Suwon-si, Gyeonggi-do 16677 (KR)
(74) Representative: Gulde & Partner
(86) International application number: PCT/KR2023/016844
(87) International publication number: WO 2024/096448

(57) **Abstract**

The present disclosure relates to a 5G or 6G communication system for supporting a higher data transmission rate. The present disclosure relates to a method of a base station of a source cell in a wireless communication system, the method comprising the steps of: receiving measurement information from a terminal; generating a first message for requesting configuration information for layer 1/layer 2 (L1/L2)-based handover on the basis of the measurement information; transmitting the first message to a candidate cell for the L 1/L2-based handover; receiving, from the candidate cell, a second message including configuration information of the candidate cell; generating a third message including radio resource control (RRC) configuration information for the L 1/L2-based handover on the basis of the configuration information of the candidate cell; transmitting the third message to the terminal; receiving measurement information based on L 1 measurement from the terminal; and transmitting an L2 message indicating handover to the candidate cell to the terminal on the basis of the measurement information based on the L1 measurement, wherein if reference configuration information is included in the first message, the second message includes delta configuration information based on the reference configuration information.

## Description

### [Technical Field]

The disclosure relates to operations of a terminal and a base station in a mobile communication system. The disclosure relates to a method and device for transmitting configuration information of candidate cells so as to support mobility based on layer 1 (L1) / layer 2 (L2) in a next-generation communication system.

### [Background Art]

5^{th} generation (5G) mobile communication technologies define broad frequency bands such that high transmission rates and new services are possible, and can be implemented not only in "Sub 6 GHz" bands such as 3.5 GHz, but also in "Above 6 GHz" bands referred to as mmWave including 28 GHz and 39 GHz. In addition, it has been considered to implement 6^{th} generation (6G) mobile communication technologies (referred to as Beyond 5G systems) in terahertz bands (e.g., 95 GHz to 3 THz bands) in order to accomplish transmission rates fifty times faster than 5G mobile communication technologies and ultra-low latencies one-tenth of 5G mobile communication technologies.

At the beginning of the 5G mobile communication technologies, in order to support services and to satisfy performance requirements in connection with enhanced mobile broadband (eMBB), ultra-reliable low latency communications (URLLC), and massive machine-type communications (mMTC), there has been ongoing standardization regarding beamforming and massive multi-input multi-output (MIMO) for mitigating radio-wave path loss and increasing radio-wave transmission distances in mmWave, supporting numerologies (e.g., operating multiple subcarrier spacings) for efficiently utilizing mmWave resources and dynamic operation of slot formats, initial access technologies for supporting multi-beam transmission and broadbands, definition and operation of bandwidth part (BWP), new channel coding methods such as a low density parity check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as vehicle-to-everything (V2X) for aiding driving determination by autonomous vehicles based on information regarding locations and states of vehicles transmitted by the vehicles and for enhancing user convenience, new radio unlicensed (NR-U) aimed at system operations conforming to various regulation-related requirements in unlicensed bands, NR UE power saving, non-terrestrial network (NTN) which is UE-satellite direct communication for providing coverage in an area in which communication with terrestrial networks is unavailable, and locationing.

Moreover, there has been ongoing standardization in air interface architecture/protocol regarding technologies such as industrial internet of things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures. i.e., 1b-step random access channel (RACH) for NR. There also has been ongoing standardization in system architecture/service regarding a 5G baseline architecture (e.g., service based architecture or service based interface) for combining network functions virtualization (NFV) and software-defined networking (SDN) technologies, and mobile edge computing (MEC) for receiving services based on UE locations.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended reality (XR) for efficiently supporting augmented reality (AR), virtual reality (VR), mixed reality (MR) and the like, 5G performance improvement and complexity reduction by utilizing artificial intelligence (AI) and machine learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as full dimensional MIMO (FD-MIMO), array antennas and large-scale antennas, metamaterial-based lenses and antennas for improving coverage of terahertz band signals, high-dimensional space multiplexing technology using orbital angular momentum (OAM), and reconfigurable intelligent surface (RIS), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultrahigh-performance communication and computing resources.

### [Disclosure]

### [Technical Problem]

The technical problem to be solved in an embodiment of the disclosure is to provide a method and device for transmitting configuration information of candidate cells so as to support L1/L2-based mobility in a next-generation communication system.

In addition, the technical problem to be solved in the disclosure is to provide a method and device for measuring and reporting a beam belonging to another cell when a terminal is currently receiving a service from a serving cell through a specific beam, and if a beam of a neighbor cell is better, receiving an indication for a cell change to the corresponding cell through L1/L2 signaling and performing the cell change. In addition, the technical problem to be solved in the disclosure is to provide a method and device for reducing the signaling overhead for receiving configuration information for respective target cells, which may be large, regarding radio resource control (RRC) configuration information applied when performing a handover to neighbor cells.

### [Technical Solution]

To solve the above problems, the disclosure provides a method of a base station of a source cell in a wireless communication system that includes receiving measurement information from a terminal, generating a first message requesting configuration information for layer 1/layer 2 (L1/L2)-based handover, based on the measurement information, transmitting the first message to a candidate cell for the L1/L2-based handover, receiving a second message including configuration information of the candidate cell from the candidate cell, generating a third message including radio resource control (RRC) configuration information for the L1/L2-based handover, based on the configuration information of the candidate cell, transmitting the third message to the terminal, receiving measurement information based on L1 measurement from the terminal, and transmitting an L2 message indicating handover to the candidate cell to the terminal, based on the measurement information based on the L1 measurement, wherein in case that reference configuration information is included in the first message, the second message includes delta configuration information based on the reference configuration information.

In addition, the disclosure provides a method of a terminal in a wireless communication system that includes transmitting measurement information to a base station of a source cell, receiving RRC configuration information for layer 1/layer 2 (L1/L2)-based handover from the base station, applying the RRC configuration information for the L1/L2-based handover, transmitting L1 measurement information to the base station based on the RRC configuration information, and receiving an L2 message indicating handover to a candidate cell from the base station, wherein in case that the base station uses reference configuration information, the RRC configuration information includes the reference configuration information and delta configuration information of the candidate cell based on the reference configuration information, and wherein full configuration information for the candidate cell is applied based on the reference configuration information and the delta configuration information.

In addition, the disclosure provides a method of a base station of a candidate cell in a wireless communication system that includes receiving, from a source cell, a first message requesting configuration information for layer 1/layer 2 (L1/L2)-based handover, generating a second message including configuration information of the candidate cell based on the first message, and transmitting the second message to the source cell, wherein a third message including radio resource control (RRC) configuration information for the L1/L2-based handover, based on the configuration information of the candidate cell, is transmitted to a terminal, and wherein in case that reference configuration information is included in the first message, the second message includes delta configuration information based on the reference configuration information.

In addition, the disclosure provides a base station of a source cell in a wireless communication system that includes a transceiver and a controller. The controller controls to receive measurement information from a terminal, generate a first message requesting configuration information for layer 1/layer 2 (L1/L2)-based handover, based on the measurement information, transmit the first message to a candidate cell for the L 1/L2-based handover, receive a second message including configuration information of the candidate cell from the candidate cell, generate a third message including radio resource control (RRC) configuration information for the L1/L2-based handover, based on the configuration information of the candidate cell, transmit the third message to the terminal, receive measurement information based on L1 measurement from the terminal, and transmit an L2 message indicating handover to the candidate cell to the terminal, based on the measurement information based on the L1 measurement, wherein in case that reference configuration information is included in the first message, the second message includes delta configuration information based on the reference configuration information.

In addition, the disclosure provides a terminal in a wireless communication system that includes a transceiver and a controller. The controller controls to transmit measurement information to a base station of a source cell, receive RRC configuration information for layer 1/layer 2 (L1/L2)-based handover from the base station, apply the RRC configuration information for the L1/L2-based handover, transmit L1 measurement information to the base station based on the RRC configuration information, and receive an L2 message indicating handover to a candidate cell from the base station, wherein in case that the base station uses reference configuration information, the RRC configuration information includes the reference configuration information and delta configuration information of the candidate cell based on the reference configuration information, and wherein full configuration information for the candidate cell is applied based on the reference configuration information and the delta configuration information.

In addition, the disclosure provides a base station of a candidate cell in a wireless communication system that includes a transceiver and a controller. The controller controls to receive, from a source cell, a first message requesting configuration information for layer 1/layer 2 (L1/L2)-based handover, generate a second message including configuration information of the candidate cell based on the first message, and transmit the second message to the source cell, wherein a third message including radio resource control (RRC) configuration information for the L1/L2-based handover, based on the configuration information of the candidate cell, is transmitted to a terminal, and wherein in case that reference configuration information is included in the first message, the second message includes delta configuration information based on the reference configuration information.

The technical problems to be solved in embodiments of the disclosure are not limited to the above-mentioned technical problems, and other technical problems not mentioned can be clearly understood from the description below by a person having ordinary skill in the technical field to which the disclosure belongs.

### [Advantageous Effects]

According to various embodiments of the disclosure, it is possible to provide a method and device for transmitting configuration information of candidate cells so as to support L1/L2-based mobility in a next-generation communication system.

In addition, according to various embodiments of the disclosure, it is possible to significantly reduce the overhead of RRC configuration information actually transmitted to a terminal by generating and transmitting configuration information for neighbor cells based on configuration information for one reference cell through a proposed delta configuration-based L1/L2 triggered mobility (hereinafter referred to as LTM) neighbor cell configuration method.

### [Description of Drawings]

FIG. 1 is a diagram illustrating a structure of a next-generation mobile communication system to which various embodiments of the disclosure are applied.
FIG. 2 is a diagram illustrating a radio protocol structure of a next-generation mobile communication system to which various embodiments of the disclosure can be applied.
FIG. 3 is a diagram illustrating a structure of another next-generation mobile communication system to which various embodiments of the disclosure can be applied.
FIG. 4 is a diagram illustrating a scenario in which a UE transmits and receives data through a beam of a transmission/reception point (TRP) of a neighbor cell that supports a beam change based on L1/L2 while maintaining a connected state with a serving cell, as a scenario for inter-cell beam management referenced in various embodiments of the disclosure.
FIGS. 5A and 5B are diagrams illustrating a scenario in which a UE changes a serving cell and beam to a TRP of a cell supporting an L1/L2-based beam change and transmits/receives data, as embodiments considered in the disclosure.
FIG. 6 is a diagram illustrating an overall operation in which a source cell transmits configuration information for a reference cell to neighbor cells for configuration of neighbor cells for L1/L2-based handover, as an example applied to the disclosure.
FIG. 7 is a diagram illustrating an overall operation in which one of source neighbor cells is used as configuration information for a reference cell for configuration of neighbor cells for L1/L2-based handover, as an example applied to the disclosure.
FIG. 8 is a diagram illustrating a UE operation of performing L1/L2-based beam change and handover, which is applied to embodiments of the disclosure.
FIG. 9 is a diagram illustrating a base station operation applied to embodiments of the disclosure.
FIG. 10 is a diagram illustrating components of a UE according to various embodiments of the disclosure.
FIG. 11 is a diagram illustrating components of a base station according to various embodiments of the disclosure.

### [Mode for Disclosure]

Hereinafter, embodiments of the disclosure will be described in detail with reference to the accompanying drawings. In the drawings, the same elements are indicated by the same symbols as much as possible. In addition, detailed descriptions of well-known functions and components that may obscure the subject matter of the disclosure will be omitted.

In the following description of embodiments, descriptions of techniques that are well known in the art and not directly related to the disclosure are omitted. This is to clearly convey the subject matter of the disclosure by omitting any unnecessary explanation.

For the same reason, some elements in the drawings are exaggerated, omitted, or schematically illustrated. Also, the size of each element does not entirely reflect the actual size. In the drawings, the same or corresponding elements are denoted by the same reference numerals.

The advantages and features of the disclosure and the manner of achieving them will become apparent with reference to embodiments described in detail below and with reference to the accompanying drawings. The disclosure may, however, be embodied in many different forms and should not be construed as being limited to the embodiments set forth herein. Rather, these embodiments are provided so that the disclosure will be thorough and complete and will fully convey the scope of the disclosure to those skilled in the art. The disclosure is only defined by the scope of claims. In the disclosure, the same reference numerals are used to indicate the same elements.

It will be understood that each block of the flowchart illustrations, and combinations of blocks in the flowchart illustrations, may be implemented by computer program instructions. These computer program instructions may be provided to a processor of a general purpose computer, special purpose computer, or other programmable data processing apparatus to produce a machine, such that the instructions, which are executed via the processor of the computer or other programmable data processing apparatus, generate means for implementing the functions specified in the flowchart block(s). These computer program instructions may also be stored in a computer usable or computer-readable memory that may direct a computer or other programmable data processing apparatus to function in a particular manner, such that the instructions stored in the computer usable or computer-readable memory produce an article of manufacture including instruction means that implement the function specified in the flowchart block(s). The computer program instructions may also be loaded onto a computer or other programmable data processing apparatus to cause a series of operational steps to be performed on the computer or other programmable apparatus to produce a computer implemented process such that the instructions that are executed on the computer or other programmable apparatus provide steps for implementing the functions specified in the flowchart block(s).

In addition, each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The term "unit", as used herein, refers to a software or hardware component or device, such as a field programmable gate array (FPGA) or application specific integrated circuit (ASIC), which performs certain tasks. However, unit is not limited to software or hardware. A unit may be constituted to reside on an addressable storage medium and constituted to execute on one or more processors. Thus, a module or unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and units may be combined into fewer components and units or further separated into additional components and modules. In addition, the components and units may be implemented to operate one or more central processing units (CPUs) in a device or a secure multimedia card.

In the disclosure, a base station refers to an entity performing resource allocation of a terminal, and may be at least one of a Node B, a base station (BS), an eNode B (eNB), a gNode B (gNB), a radio access unit, a base station controller, or a node on a network. Also, a terminal may include a user equipment (UE), a mobile station (MS), a cellular phone, a smart phone, a computer, or a multimedia system capable of performing a communication function. In addition, the embodiments of the disclosure may be applied to other communication systems having similar technical backgrounds or channel types. In addition, the embodiments of the disclosure may be applied to other communication systems through some modifications within a range that does not significantly depart from the scope of the disclosure as will be apparent to a person skilled in the art. For example, the 5^{th} generation mobile communication technology (5G, new radio, NR) developed after LTE-A may be included therein, and the 5G below may be a concept that envolves legacy LTE, LTE-A, and other similar services.

In the following description, terms for identifying access nodes, terms referring to network entities or network functions (NFs), terms referring to messages, terms referring to interfaces between network entities, terms referring to various kinds of identification information, and the like are illustratively used for the sake of convenience. Therefore, the disclosure is not limited by the terms as used below, and other terms referring to subjects having equivalent technical meanings may be used.

For convenience of explanation below, some terms and names defined in the 3rd generation partnership project (3GPP) long term evolution (LTE) standard and/or the 3GPP new radio (NR) standard may be used. However, the disclosure is not limited to such terms and names, and may be equally applied to systems conforming to other standards.

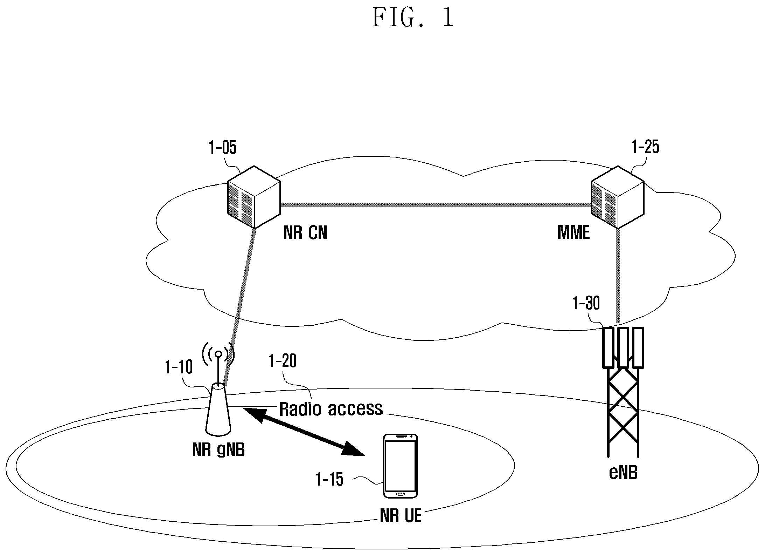

FIG. 1 is a diagram illustrating a structure of a next-generation mobile communication system to which various embodiments of the disclosure are applied.

With reference to FIG. 1, a radio access network of the next-generation mobile communication system is composed of a next-generation base station (new radio node B (NR NB)) 1-10 and a new radio core network (NR CN) (or next-generation core network (NG CN)) 1-05. A user terminal (new radio user equipment, hereinafter referred to as an NR UE or a terminal) 1-15 accesses an external network through the NR NB 1-10 and the NR CN 1-05.

In FIG. 1, the NR NB 1-10 corresponds to an evolved Node B (eNB) in the legacy LTE system. The NR NB 1-10 is connected to the NR UE 1-15 through a radio channel and may provide better service than the legacy node B. In the next-generation mobile communication system, all user traffic can be serviced through a shared channel. Thus, an apparatus for collecting state information on buffer states, available transmit power states, channel states, etc. of UEs and performing scheduling is required, and the NR NB 1-10 serves as this apparatus. In general, one NR NB controls a plurality of cells. A bandwidth greater than the existing maximum bandwidth can be applied in order to implement super-high-speed data transmission compared to the legacy LTE, and a beamforming technology can be further applied using orthogonal frequency division multiplexing (OFDM) as a radio access technology. In addition, an adaptive modulation and coding (AMC) scheme of determining a modulation scheme and a channel coding rate is applied depending on the channel state of the UE. The NR CN 1-05 performs functions such as mobility support, bearer configuration, and quality of service (QoS) configuration. The NR CN 1-05 is an apparatus for performing not only a mobility management function for the UE but also various control functions and is connected to a plurality of base stations. Further, the next-generation mobile communication system can be linked to the legacy LTE system, and the NR CN 1-05 is connected to an MME 1-25 through a network interface. The MME 1-25 is connected to an eNB 1-30, which is the legacy base station.

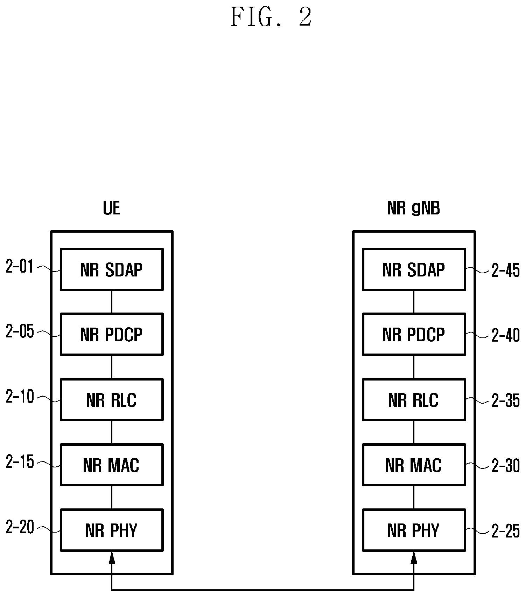

FIG. 2 is a diagram illustrating a radio protocol structure of a next-generation mobile communication system to which various embodiments of the disclosure can be applied.

With reference to FIG. 2, in each of the UE and the NR base station, the radio protocol of the next-generation mobile communication system is composed of NR SDAP 2-01 or 2-45, NR PDCP 2-05 or 2-40, NR RLC 2-10 or 2-35, and NR MAC 2-15 or 2-30.

The main functions of the NR SDAP 2-01 or 2-45 may include some of the following functions.
- User data transmission function (Transfer of user plane data)
- Function of mapping QoS flow and a data bearer for uplink and downlink (Mapping between a QoS flow and a DRB for both downlink (DL) and uplink (UL))
- Function of marking a QoS flow ID for uplink and downlink (Marking QoS flow ID in both DL and UL packets)
- Function of mapping reflective QoS flow to a data bearer for uplink SDAP PDUs (Reflective QoS flow to DRB mapping for the UL SDAP PDUs)

With respect to the SDAP layer device, the UE may be configured through an RRC message whether or not to use a header of the SDAP layer device or whether or not to use a function of the SDAP layer device, for each PDCP layer device, each bearer, or each logical channel. If the SDAP header is configured, a 1-bit indicator of NAS reflective QoS of the SDAP header and a 1 bit-indicator of AS reflective QoS may indicate that the UE can update or reconfigure mapping information about QoS flow and a data bearer in uplink and downlink. The SDAP header may include QoS flow ID information indicating the QoS. The QoS information may be used as data processing priority, scheduling information, etc. to support a seamless service.

The main functions of the NR PDCP 2-05 or 2-40 may include some of the following functions.
- Header compression and decompression function (Header compression and decompression: ROHC only)
- User data transmission function (Transfer of user data)
- Sequential delivery function (In-sequence delivery of upper layer PDUs)
- Non-sequential delivery function (Out-of-sequence delivery of upper layer PDUs)
- Reordering function (PDCP PDU reordering for reception)
- Duplicate detection function (Duplicate detection of lower layer SDUs)
- Retransmission function (Retransmission of PDCP SDUs)
- Ciphering and deciphering function (Ciphering and deciphering)
- Timer-based SDU removal function (Timer-based SDU discard in uplink)

In the above description, the reordering function of the NR PDCP device refers to a function of sequentially reordering PDCP PDUs received from a lower layer on the basis of a PDCP sequence number (SN). This may include a function of sequentially transferring the reordered data to an upper layer, a function of directly transferring the reordered data without regard to the order, a function of recording lost PDCP PDUs by reordering, a function of reporting the statuses of the lost PDCP PDUs to a transmitting side, or a function of requesting retransmission of the lost PDCP PDUs.

The main functions of the NR RLC 2-10 or 2-35 may include some of the following functions.
- Data transmission function (Transfer of upper layer PDUs)
- Sequential delivery function (In-sequence delivery of upper layer PDUs)
- Non-sequential delivery function (Out-of-sequence delivery of upper layer PDUs)
- ARQ function (Error correction through ARQ)
- Concatenation, segmentation, and reassembly function (Concatenation, segmentation and reassembly of RLC SDUs)
- Re-segmentation function (Re-segmentation of RLC data PDUs)
- Reordering function (Reordering of RLC data PDUs)
- Duplicate detection function (Duplicate detection)
- Error detection function (Protocol error detection)
- RLC SDU deletion function (RLC SDU discard)
- RLC re-establishment function (RLC re-establishment)

In the above description, the sequential delivery function (In-sequence delivery) of the NR RLC device refers to a function of sequentially transferring RLC PDUs received from a lower layer to an upper layer. In the case where one original RLC SDU is divided into a plurality of RLC SDUs and received, the sequential delivery function may include a function of reassembling and transmitting the RLC SDUs. The sequential delivery function may include a function of reordering the received RLC PDUs on the basis of an RLC sequence number (SN) or a PDCP SN, a function of recording lost RLC PDUs by reordering, a function of reporting the statuses of the lost RLC PDUs to a transmitting side, and a function of requesting retransmission of the lost RLC PDUs. In the case that there is a lost RLC SDU, the sequential delivery function may include a function of sequentially transferring only RLC SDUs preceding the lost RLC SDU to the upper layer. If a predetermined timer expires even in case that there is a lost RLC SDU, the sequential delivery function may include a function of sequentially transferring all RLC SDUs received before the timer starts to the upper layer, or a function of sequentially transferring all RLC SDUs received up to that point in time to the upper layer. In addition, the RLC PDUs may be processed in the order in which they are received (in the order of arrival, regardless of the order of sequence numbers) and delivered to the PDCP device out of order (out-of sequence delivery). In the case of segments, the segments stored in the buffer or to be received later may be received, reassembled into a complete one RLC PDU, processed, and delivered to the PDCP device. The NR RLC layer may not include a concatenation function, and this function may be performed in the NR MAC layer or replaced with a multiplexing function of the NR MAC layer.

In the above description, the non-sequential delivery function (Out-of-sequence delivery) of the NR RLC device refers to a function of transferring RLC SDUs received from a lower layer directly to an upper layer regardless of the order of the RLC SDUs. In the case where one original RLC SDU is divided into a plurality of RLC SDUs and received, the non-sequential delivery function may include a function of reassembling and transmitting the RLC SDUs, and a function of storing RLC SNs or PDCP SNs of the received RLC PDUs, reordering them, and recording lost RLC PDUs.

The NR MAC 2-15 or 2-30 may be connected to a plurality of NR RLC layer devices composed in one terminal, and main functions of the NR MAC 2-15 or 2-30 may include some of the following functions.
- Mapping function (Mapping between logical channels and transport channels)
- Multiplexing and demultiplexing function (Multiplexing/demultiplexing of MAC SDUs)
- Scheduling information reporting function (Scheduling information reporting)
- HARQ function (Error correction through HARQ)
- Logical channel priority control function (Priority handling between logical channels of one UE)
- UE priority control function (Priority handling between UEs by means of dynamic scheduling)
- MBMS service identification function (MBMS service identification)
- Transport format selection function (Transport format selection)
- Padding function (Padding)

The NR PHY layer 2-20 or 2-25 may perform operations of channel-coding and modulating upper layer data to generate an OFDM symbol and transmitting it through a radio channel or demodulating and channel-decoding an OFDM symbol received through a radio channel and transmitting it to an upper layer.

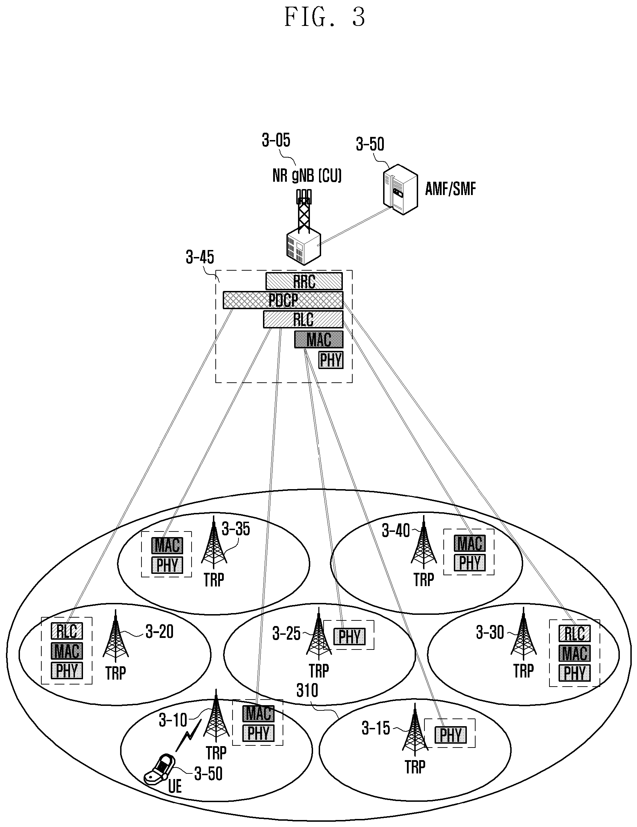

FIG. 3 is a diagram illustrating a structure of another next-generation mobile communication system to which various embodiments of the disclosure can be applied.

With reference to FIG. 3, a cell served by an NR gNB 3-05 operating based on a beam may be composed of multiple transmission reception points (TRPs) 3-10, 3-15, 3-20, 3-25, 3-30, 3-35, and 3-40. The TRP 3-10 to 3-40 represents a block that separates some functions of transmitting and receiving physical signals from the legacy NR base station (eNB), and is composed of multiple antennas. The NR gNB 3-05 may be expressed as a central unit (CU) and the TRP may be expressed as a distributed unit (DU). The functions of the NR gNB 3-05 and the TRP may be composed by separating each layer in PDCP/RLC/MAC/PHY layers as denoted by 3-45. That is, the TRPs 3-15 and 3-25 may have only the PHY layer and perform the function of the corresponding layer, the TRPs 3-10, 3-35 and 3-40 may have only the PHY layer and the MAC layer and perform the functions of the corresponding layers, and the TRPs 3-20 and 3-30 may have only the PHY layer, the MAC layer, and the RLC layer and perform the functions of the corresponding layers. In particular, the TRPs 3-10, 3-15, 3-20, 3-25, 3-30, 3-35, and 3-40 may use beamforming technology that transmits and receives data by generating narrow beams in various directions using multiple transmit/receive antennas. A UE 3-50 accesses the NR gNB 3-05 and an external network through the TRPs 3-10, 3-15, 3-20, 3-25, 3-30, 3-35, and 3-40. In order to provide services to users, the NR gNB 3-05 collects state information, such as buffer states, available transmit power states, and channel statesus of UEs, and performs scheduling, thereby supporting connections between the UEs and a core network (CN), especially, AMF/SMF 3-50.

In the disclosure, the TRP is based on a structure 3-15 or 3-25 that has only the PHY layer and can perform the function of that layer.

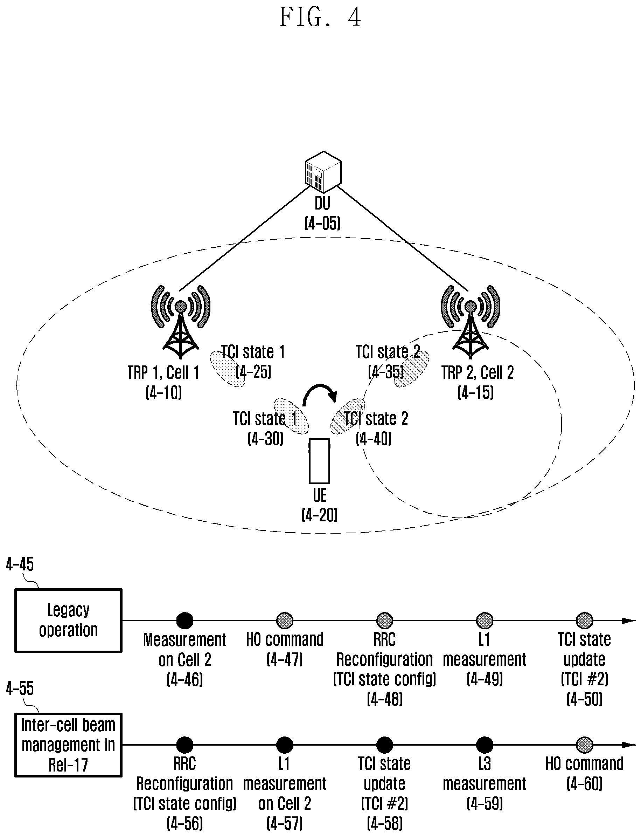

FIG. 4 is a diagram illustrating a scenario in which a UE transmits and receives data through a beam of a transmission/reception point (TRP) of a neighbor cell that supports a beam change based on L1/L2 while maintaining a connected state with a serving cell, as a scenario for inter-cell beam management referenced in various embodiments of the disclosure.

Although FIG. 4 illustrates a case where multiple cells (TRP1-Cell1, TRP2-Cell2) 4-10 and 4-15 exist in one distributed unit (DU) 4-05, the overall content of the disclosure can also be applied to the case of inter-DU (each DU constitutes one TRP-Cell). In addition, in the entirety of the disclosure, a cell (TRP 2, Cell 2) that is not a serving cell supporting L1/L2-based mobility (beam change and serving cell change) is interchangeably referred to as a neighbor cell, a non-serving cell, an additional cell with the physical cell identity (PCI) different from the serving cell, etc.

In the legacy UE beam change procedure 4-45, a UE4-20 transmits and receives data in a connected state through TRP 1 4-10 of serving cell 1, and may be set to the optimal beam, transmission configuration indicator (TCI) state 1 4-25 or 4-30. At this stage, the UE may receive configuration information for L3 channel measurement (RRM; radio resource management) on an additional cell (TRP 2-Cell 2) 4-15 having a different PCI from the serving cell through RRC configuration information from the serving cell 4-10, and performs L3 measurement operation 4-46 for the corresponding frequency and cell. Thereafter, the serving cell (TRP 1-Cell 1) 4-10 may command a handover to the corresponding cell (TRP 2-Cell 2) 4-15 in 4-47 based on the reported measurement value, and upon the handover completion, additional RRC configuration information may be transmitted in 4-48 to the UE 4-20 through the TRP 2-Cell 2 4-15. The RRC configuration information may include uplink (UL)/downlink (DL) configuration information in the corresponding cell, L1 measurement related configuration (channel state information-referernce signal (CSI-RS) measurement and reporting), etc., and in particular, it may include TCI state configuration information for physical downlink control channel (PDCCH) and physical downlink shared channel (PDSCH). The UE performs L1 measurement according to the configuration in 4-49, and the base station updates the TCI state through L1/L2 signaling according to the measurement report in 4-50. Here, the optimal beam, TCI state 2 4-40, may be indicated. At this stage, before the handover, the serving cell is Cell 1, and after the handover, Cell 2 becomes the serving cell. In other words, many procedures and time are required even after the handover until the optimal beam is indicated.

Unlike the legacy UE beam change procedure 4-45, an improved beam change technique 4-55 considered in the disclosure is as follows. The UE may receive, from the serving cell 4-10 through RRC configuration information 4-56, beam configuration associated with additional cell (TRP 2-Cell 2) 4-15 having a PCI different from the serving cell. The beam configuration associated with the additional cell (TRP 2-Cell 2) 4-15 having the different PCI from the serving cell, i.e., a part that associates the TCI state corresponding to TRP2, applies a method for associating and indicating a new cell ID (physical cell ID, PCI; additionalPCI-r17) as shown in Table 1 below.

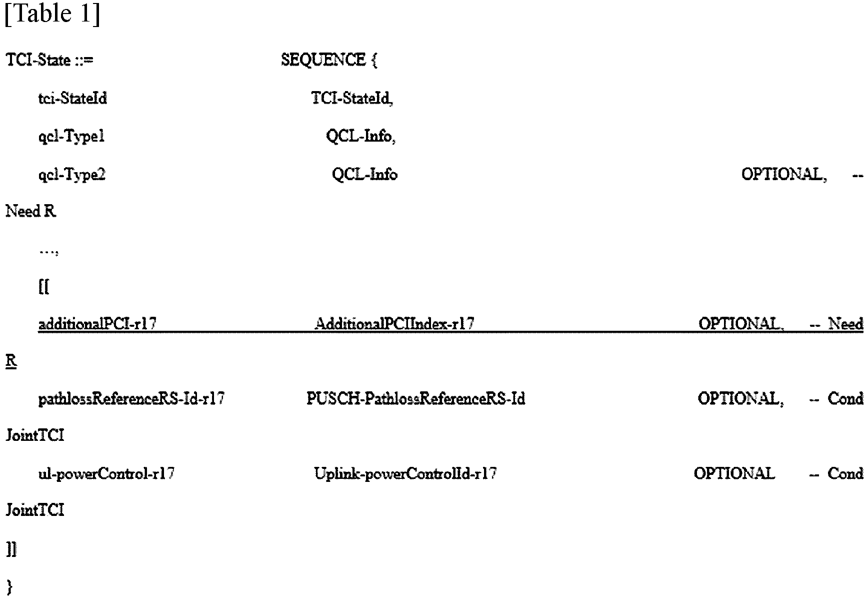

In addition, for the corresponding inter-cell beam management, a unified TCI state framework is applied. The unified TCI state framework is to apply a common TCI state framework to uplink and downlink, and to a common channel and a dedicated channel, and may be configured as one of a joint UL/DL mode and a separate UL/DL mode.

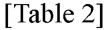

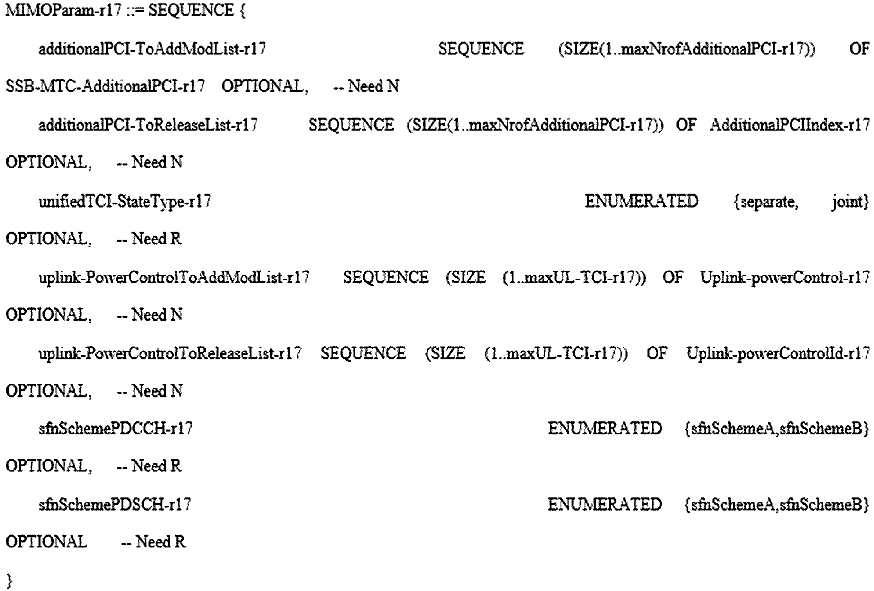

1. Joint UL/DL mode: Configure UL and DL to share the same TCI configuration (in PDSCH-Config). Table 3

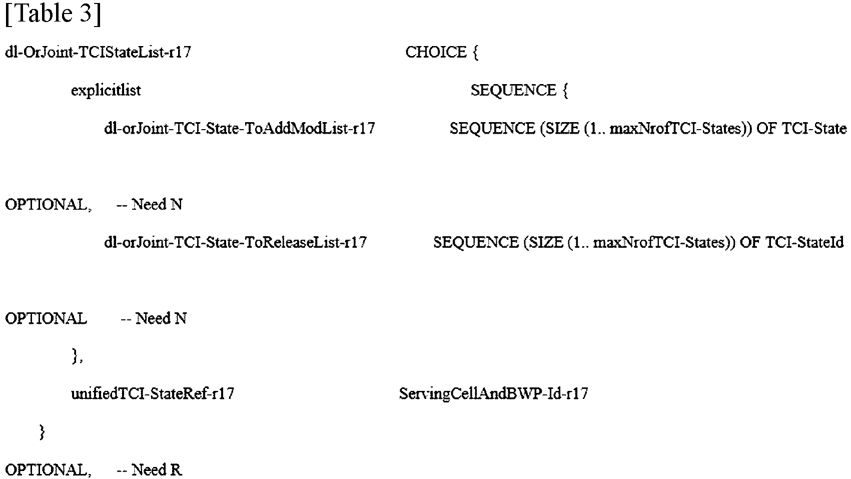

2. Separate UL/DL mode: UL and DL provide their own TCI configurations. The TCI state for DL follows the configuration in dl-OrJoint-TCIStateList-r17 (in PDSCH-Config), and the TCI state for UL follows ul-TCI-StateList-r17 (in BWP-UplinkDedicated). Table 4

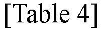

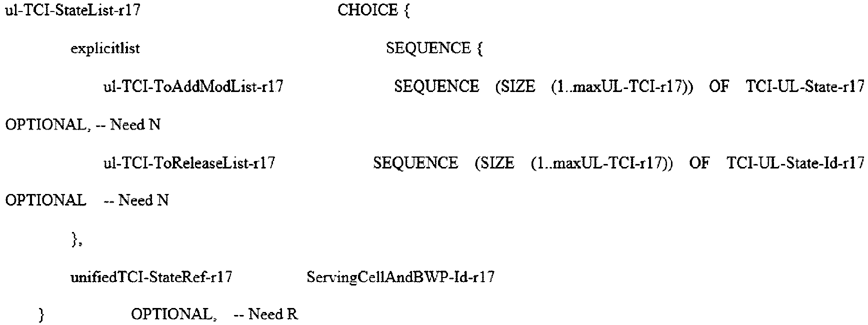

After the configuration for TRP 2-Cell 2 is provided in a state of RRC connected to the serving cell 1, the UE performs L1 measurement on the TRP 2-Cell 2 according to the configuration and reports the result to the serving cell (Cell 1) 4-10 in 4-57. If it is determined that a change to a specific beam (TCI state 2) 4-35 and 4-40 of TRP 2 (Cell 2) 4-15 is necessary rather than the serving cell beam (TCI state 1) 4-25 and 4-30 based on the measurement result, the serving cell triggers the beam change and indicates it to the UE via L1/L2 signaling in 4-58. The UE changes the beam to the specific beam (TCI state 2) 4-40 of TRP 2 (Cell 2) 4-15 based on the indication, and performs physical channel configuration and upper layer configuration operations associated with the configured beam. From this step, even though the UE is in a connected state to the serving cell (Cell 1) 4-10, the UE performs data transmission and reception (PDCCH/PDSCH reception, physical uplink control channel (PUCCH)/physical uplink shared channel (PUSCH) transmission) using a channel link of TRP 2 (Cell 2) 4-15. That is, transmission and reception for a common control channel are performed through the serving cell (Cell 1) 4-10. Afterwards, the UE performs L3 measurement operation according to the measurement configuration configured in the independent serving cell in 4-59, and may receive a handover command message from the serving base station (Cell 1) and perform a serving cell change to Cell 2 in 4-60. Through this technique 4-55, the UE performs data transmission and reception with a specific TRP 2 of Cell2 that supports L1/L2-based mobility in a connected state to the serving cell, and can continuously use the corresponding beam even after handover.

For reference, RRC configurations for the configurations and operations related to the L1 measurement and report in the above step 4-57 are described below. The contents are also basically applied to the following embodiments of the disclosure, and enhanced techniques may be added in future embodiments.
1. CSI measurement configuration
   - Measurement-required CSI-RS resources and resource pools (nzp-CSI-RS, csi-IM, csi-SSB)
   - Measurement-required CSI-RS resource configuration (aperiodic, semi-persistent) and triggering configuration
   - In the case that the CSI-RS resource refers to the SSB resource, additional PCI information is provided to enable L1 measurement from neighbor cells (up to 7 neighbor cells (PCI) can be added in one serving cell)

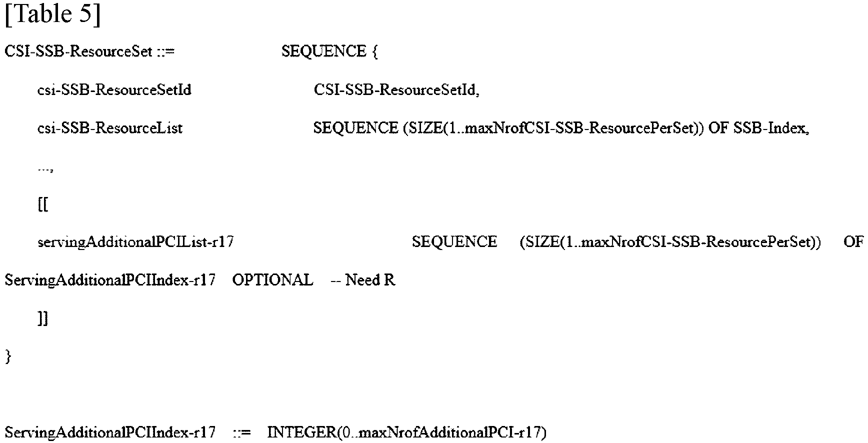

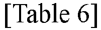

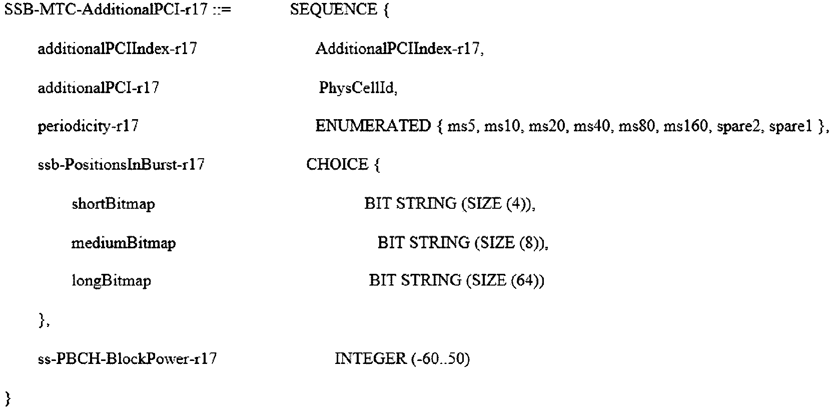

### 2. CSI report configuration

- Report type: periodic report, semi-persistent report for PUCCH, semi-persistent report for PUSCH, aperiodic report for PUSCH
- Report quantity
- Other configurations required for reporting

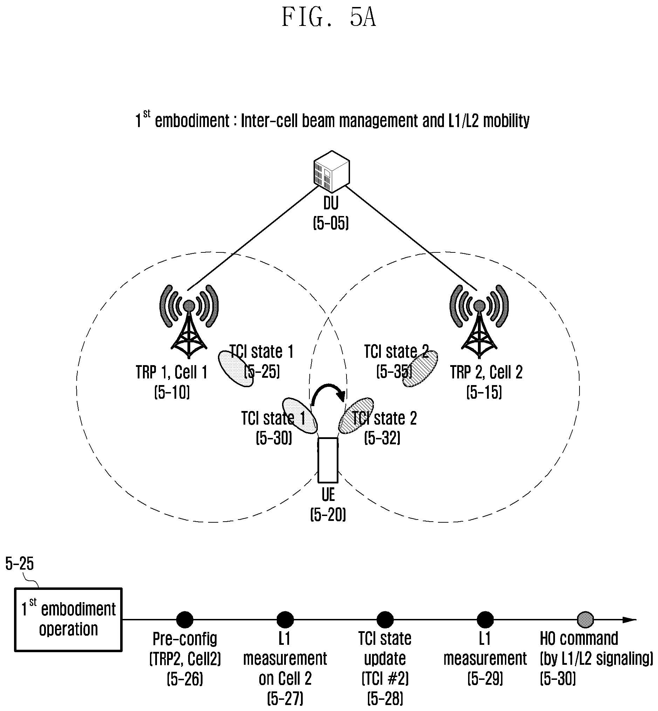

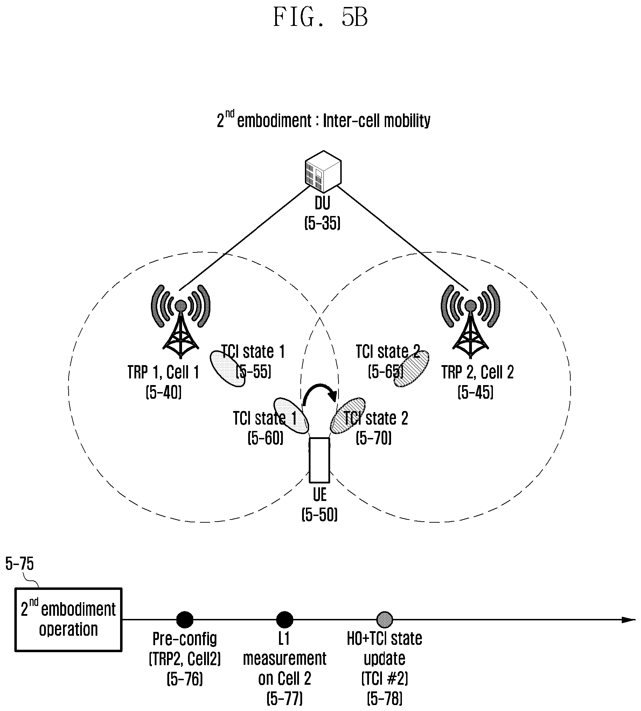

FIGS. 5A and 5B are diagrams illustrating a scenario in which a UE changes a serving cell and beam to a TRP of a cell supporting an L1/L2-based beam change and transmits/receives data, as embodiments considered in the disclosure. Hereinafter, FIG. 5A and FIG. 5B are referred to as FIG. 5.

Although FIG. 5 illustrates a case where multiple cells (TRP1-Cell1, TRP2-Cell2) 5-10 and 5-15 or 5-40 and 5-45 exist within one distributed unit (DU) 5-05 or 5-35, the overall content of the disclosure can also be applied to the case of inter-DU (each DU constitutes one TRP-Cell).

Unlike the existing UE beam change procedures 4-45 and 4-55 described in FIG. 4, the enhanced beam change techniques 5-25 and 5-75 considered in the embodiments are as follows.
1. First embodiment 5-25: L1/L2 handover is performed after inter-cell beam management (change) operation
2. Second embodiment 5-75: L1/L2 handover is performed immediately

First, the entire operation of the first embodiment is described. A UE 5-20 may receive, from a serving cell 5-10, common configuration information and dedicated configuration information for an additional cell (TRP 2-Cell 2) 5-15 having a PCI different from the serving cell through RRC configuration information in 5-26. That is, configuration information corresponding to ServingCellID or candidateCellID (cell ID associated with PCI), ServingCellConfigCommon and ServingCellConfig may be provided to the UE 5-20 in advance. The corresponding configuration information may be provided in the form of pre-configuration in the RRC configuration and may include configuration information for one or more cells. In addition, the corresponding configuration is characterized in that it includes all configuration information (cell configuration, bearer configuration, security key configuration, etc.) applied when the UE 5-20 moves (handovers) to the corresponding cell. Additionally, the corresponding configuration includes the unified TCI state configuration described in step 4-56 of FIG. 4 and the configurations related to L1 measurement and report. The embodiment of FIG. 5 describes in detail a structure for providing in advance configuration for candidate neighbor cells where L1/L2 handover can be performed, and in particular, a method for applying configuration information for a reference cell and delta configuration to the configuration for candidate neighbor cells.

After the configuration for TRP 2-Cell 2 5-15 is provided in a state of RRC connected to the serving cell 1 5-10, the UE 5-20 performs L1 measurement on the corresponding TRP 2-Cell 2 5-15 according to the received configuration in step 5-27 and reports the result to the serving cell (Cell 1) 5-10. If it is determined that a change to a specific beam (TCI state 2) 5-32 of TRP 2 (Cell 2) 5-15 is necessary rather than the serving cell beam (TCI state 1) 5-25 based on the measurement result, the serving cell 5-10 triggers a beam change in step 5-28 and indicates it to the UE 5-20 through L1/L2 signaling. The UE 5-20 performs the beam change to TRP 2 (Cell 2) 5-15 through the indication, thereby enabling data transmission/reception through the TRP 2 (Cell 2) 5-15. At this time, the serving cell change does not occur, and the UE 5-20 is still RRC-connected to the serving cell (Cell 1) 5-10. Afterwards, the UE 5-20 still performs L1 measurement on TRP 2-Cell 2 5-15 and reports the result to the serving cell (Cell 1) 5-10. If the L1 measurement result reported by the UE 5-20 satisfies the triggering condition for handover to TRP 2-Cell 2 5-15 (the detailed operation will be described below), the serving cell (Cell 1) 5-10 commands a handover to the UE 5-20. This command may be an L1/L2 message. That is, an indication that indicates a handover may be included in a medium access control (MAC) control element (CE) or downlink control information (DCI). The MAC CE is an L2 message, and the DCI is an L1 message, but examples of L1 and L2 messages are not limited thereto.

Now, the entire operation of the second embodiment is described. A UE 5-50 may receive, from a serving cell 5-40, common configuration and dedicated configuration information for an additional cell (TRP 2-Cell 2) 5-45 having a PCI different from the serving cell through RRC configuration information in 5-76. That is, configuration information corresponding to ServingCellID or candidateCellID (cell ID associated with PCI), ServingCellConfigCommon and ServingCellConfig may be provided in advance. The configuration information for the corresponding cell may be a cell group-level configuration (CellGroupConfig) rather than a cell-level configuration, or may be delivered as a configuration in the unit of an RRC configuration message (RRCReconfiguration).

The corresponding configuration information may be provided in the form of pre-configuration in the RRC configuration and may include configuration information for one or more cells. In addition, the corresponding configuration is characterized in that it includes all configuration information (cell configuration, bearer configuration, security key configuration, etc.) applied when the UE moves (handovers) to the corresponding cell. Additionally, the corresponding configuration includes the unified TCI state configuration described in step 4-56 of FIG. 4 and the configurations related to L1 measurement and report. The embodiment of FIG. 5 describes in detail a structure for providing in advance configuration for candidate neighbor cells where L1/L2 handover can be performed, and in particular, a method for applying configuration information for a reference cell and delta configuration to the configuration for candidate neighbor cells.

After the configuration for TRP 2-Cell 2 5-45 is provided in a state of RRC connected to the serving cell 1 5-40, the UE 5-50 performs L1 measurement on the corresponding TRP 2-Cell 2 5-45 according to the received configuration and reports the result to the serving cell (Cell 1) 5-40 in 5-77. If it is determined that a handover is necessary along with a beam change to a specific beam (TCI state 2) 5-70 of TRP 2 (Cell 2) 5-45 rather than the serving cell beam (TCI state 1) 5-45 based on the measurement result, the serving cell 5-40 triggers a beam change and handover in step 5-78 and indicates them to the UE 5-50 through L1/L2 signaling. The UE 5-50 performs a handover to TRP 2 (Cell 2) 5-15 together with a beam change through the indication, thereby enabling data transmission/reception through the TRP 2 (Cell 2) 5-15. At this time, the UE 5-50 applies the configuration information, which is previously received in step 5-76, for a target cell to which the handover is performed. Depending on whether uplink synchronization is required in step 5-78, the UE 5-50 may perform random access or omit the random access to the target cell. A detailed operation is described in the drawings below.

Hereinafter, in relation to a method for transmitting the configuration information for a candidate neighbor cell that supports L1/L2 inter-cell handover, the disclosure considers methods for applying a delta configuration to a candidate neighbor cell based on RRC configuration information for one reference cell.

In particular, methods for defining and transmitting a reference cell configuration are proposed as follows, and detailed operations according to each method are given in the following embodiments. In disclosure, the reference cell configuration is used interchangeably with a reference cell, a reference configuration, etc.
1. First reference cell configuration method: Defining current source cell (primary cell (PCell) or secondary cell (SCell)) as the reference cell
   - If PCell is the reference cell, the reference cell can be indicated via an explicit cell indicator or implicitly expressed as the reference cell (the standard defines the corresponding rule)
   - If SCell is the reference cell, the reference cell can be indicated via an explicit cell indicator (including a new indicator)
2. Second reference cell configuration method: Defining one of candidate neighbor cells as the reference cell
   - A first candidate neighbor cell is indicated as the reference cell (via an explicit indicator or implicitly expressed (the standard defines the corresponding rule))
   - One of candidate neighbor cells is indicated as the reference cell via an explicit indicator
3. Third reference cell configuration method: Defining a new additional cell as the reference cell
   - A field for new cell configuration is defined and configuration for the field is defined as the reference cell configuration

Additionally, in various embodiments of the disclosure below, in case that transmitting the configuration for a candidate neighbor cell that supports L1/L2 inter-cell handover, the configuration information for a target candidate neighbor cell is described in a way that can cover all of the cell-level, cell group level, and RRC message level. The method for transmitting the configuration information for the candidate neighbor cell is possible in all three of the above, but since it is not greatly related to the method of applying the delta configuration, applying the delta configuration proposed in the disclosure to the above three methods is not greatly heterogeneous.

Various embodiments of the disclosure describe in detail a method for supporting L1/L2 inter-cell handover under intra-CU conditions. That is, multiple DUs may exist in one CU, and each DU may have multiple cells. In particular, it is proposed that the configuration for a serving cell and each candidate neighbor cell should be transmitted to a CU actually generating an RRC message, and that communication is performed through an F1 interface (an interface between the CU and the DU). Each DU collects configuration information for candidate neighbor cells and transmits it to the CU through the F1 interface, and the CU generates an RRC message based on the received configuration and transmits it to the source cell.

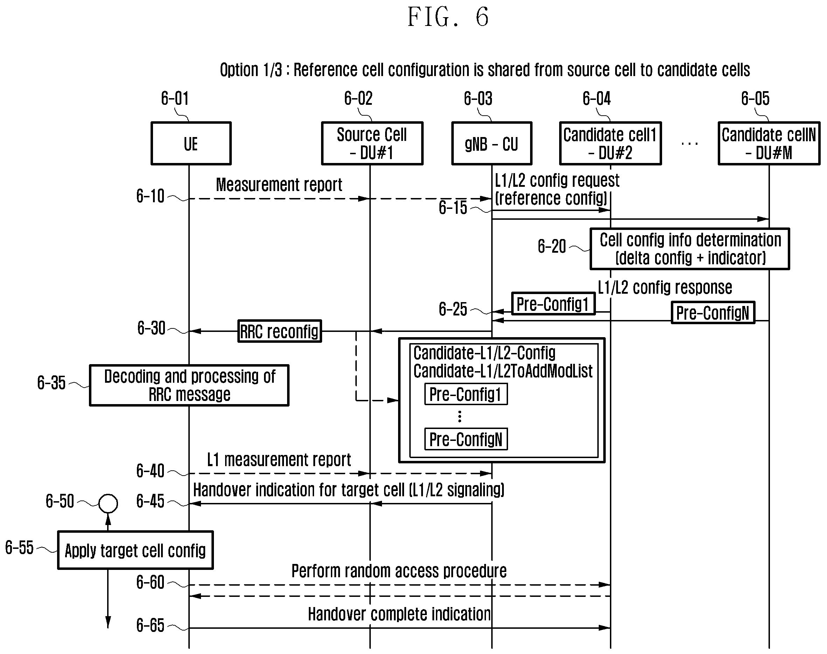

FIG. 6 is a diagram illustrating an overall operation in which a source cell transmits configuration information for a reference cell to neighbor cells for configuration of neighbor cells for L1/L2-based handover, as an example applied to the disclosure. In particular, the example of FIG. 6 shows the operation in case that the first reference cell configuration method and the third reference cell configuration method are applied among the above-described methods for defining and transmitting the reference cell configuration.

A UE 6-01 in the RRC connected state performs data transmission and reception with a source cell 1 6-02, and in step 6-10 transmits measurement values for the serving cell and/or neighbor cells to the source cell 1 6-02 according to the configured measurement and report. At this time, the measurement values are actually transmitted to a CU 6-03 of gNB. This is because the gNB CU 6-03 is responsible for RRC message processing and determines mobility. The gNB CU 6-03 generates a message (L1/L2 config request message) requesting configuration information for L1/L2-based handover from neighbor cells 6-04 and 6-05 based on the measurement value report received from the UE, and transmits the message to the neighbor cells 6-04 and 6-05 in step 6-15. The message requesting the configuration information for L1/L2-based handover may be transmitted through an F1 interface. In FIG. 6, the candidate cell is shown as being linked to the DU, but in reality, the candidate cell and the DU may be mapped 1:1, or multiple candidate cells may be included in one DU. In addition, the message requesting the configuration information for the L1/L2-based handover may be an existing handover request message, a UE context request message, a UE context modification request message, etc., or may be a new F1 or Xn message. The message requesting the configuration information for the L1/L2-based handover not only notifies the neighbor cells that they are determined as candidate cells for L1/L2-based handover, but also requests RRC configuration information to be applied when the L1/L2-based handover is performed to the corresponding cell. As described above, the RRC configuration information (Pre-Config1, ⊚Pre-ConfigN) applied when the L1/L2-based handover is performed may have one of the structures of a cell level, a cell group level, and an RRC message level.

In addition, the example of FIG. 6 is the case where the first reference cell configuration method and the third reference cell configuration method are applied, and in particular, the message requesting the configuration information for L 1/L2-based handover is characterized in that information and configuration for the reference cell are transmitted simultaneously. As described above, if the PCell is the reference cell in the first reference cell configuration method, the reference cell may be indicated through an explicit cell indicator or implicitly expressed (the corresponding rule is defined in the standard), and if the SCell is the reference cell, the reference cell is indicated through an explicit cell indicator (including a new indicator). In addition, the configuration information for the corresponding reference cell may be transmitted together in the message requesting the configuration information for L 1/L2-based handover. In the case of the third reference cell configuration method, a new additional cell may be defined as the reference cell, and a new cell configuration for the corresponding reference cell may be generated and then transmitted together in the message requesting the configuration information for L1/L2-based handover. Additionally, the message requesting the configuration information for L1/L2-based handover may include an indicator that requests the candidate neighbor cells 6-04 and 6-05 to provide the configuration information for L1/L2-based handover by applying delta configuration. This indicator may be requested for each cell or may be requested commonly for all cells.

In step 6-20, the candidate neighbor cells 6-04 and 6-05 that have received the message requesting the configuration information for L1/L2-based handover generate, based on delta configuration, configuration information for each candidate neighbor cell in case that the L1/L2-based handover is applied based on the received configuration information of the reference cell. Each of the candidate neighbor cells 6-04 and 6-05 contains the generated configuration information for L1/L2-based handover in a configuration information response message (L1/L2 config response message) for L1/L2-based handover and transmits it to the gNB CU 6-03 in step 6-25.

In step 6-30, the source cell 6-02 receives the RRC message generated by the gNB CU 6-03 and transmits it to the UE 6-01. The RRC message is a message that contains the configuration information (Pre-Config1, ⊚Pre-ConfigN) for candidate neighbor cells to which the L1/L2-based handover is applied. In step 6-35, the UE 6-01 that receives the RRC message performs a procedure for decoding and processing the RRC message. This processing may include ASN.1 decoding and validity determination of the received message and a method for storing and managing the configuration contents.

In step 6-40, the UE 6-01 performs measurement (e.g., L1 measurement) and report for each candidate neighbor cell. The measurement information received by the source cell 6-02 may be transferred to the gNB CU 6-03. The gNB CU 6-03 or the source cell 6-02 that has received the measurement information may determine a handover based on the measurement information. If it is determined that a handover is necessary, the gNB CU 6-03 or the source cell 6-02 indicates an L1/L2 handover to the UE 6-01 in step 6-45. As L1/L2 signaling in step 6-45, MAC CE and/or DCI including a handover indicator may be used. The L1 measurement value transfer for determining the L1/L2 handover and the handover determination in steps 6-40 and 6-45 may be performed by the source cell 6-02 or the source gNB CU 6-03. In the case where the gNB CU 6-03 makes all determinations, the source cell 6-02 transfers the L1 measurement value received from the UE 6-01 to the gNB CU 6-03, and transfers the handover indication received from the gNB CU 6-03 to the UE 6-01 using L1/L2 signaling according to the handover determination of the gNB CU 6-03. However, in the case where the source cell 6-02 makes the final determination, the source cell 6-02 does not transfer the L1 measurement value to the gNB CU 6-03 and determine the handover by itself based on a measurement value criteria (threshold value and measurement value range) for making the handover determination for the respective candidate neighbor cells received from the previous gNB, and the L1/L2 signaling is transferred to the UE 6-01 according to the determination of the source cell 6-02.

In case that the L1/L2 handover indication is transmitted to the UE 6-01, the UE 6-01 starts a handover procedure in step 6-50 and starts a timer for L1/L2 handover. The timer may be a newly configured timer, or the existing T304 timer may be reused. In step 6-55, the UE 6-01 applies the configuration for the target cell to which the L1/L2 handover is applied. This is one of the neighbor cell configurations received previously in step 6-30. In step 6-60, depending on the configuration applied, the UE 6-01 performs random access for the target cell 6-04 if random access is required, and if random access is not indicated nor required (if uplink synchronization has already been performed or made), the random access procedure is omitted. In step 6-65, the UE 6-01 performs a handover completion procedure with the target cell 6-04. This procedure may vary depending on a method for performing a handover complete indication, and may be a process of transferring an RRCReconfiugrationComplete message in case that the UE 6-01 has received the configuration of the target cell at the RRC message level. However, in case that the UE 6-01 has received the configuration of the target cell at the cell level or cell group level, a new handover complete indication message (new RRC message or MAC CE) may replace this procedure.

Although omitted in FIG. 6, if a change in the reference cell and reference cell configuration is required, the configuration-related operations may be updated with F1 interface messages between the gNB CU and the neighbor cells. Particularly, in the case where the reference cell configuration is changed, the above-described steps 6-15 to 6-30 are repeated to perform the change in the reference cell and reference cell configuration, and the changed configuration information is transmitted to the UE 6-01. In addition, although omitted in FIG. 6, new MAC CE and DCI may be introduced to dynamically indicate the candidate neighbor cells to which L1/L2-based handover is applied, and dynamically indicate valid configuration or release the configuration (release previously transmitted L1/L2-based handover configuration). Alternatively, the related operations may be performed internally by the gNB, and no separate signaling may be transmitted to the UE.

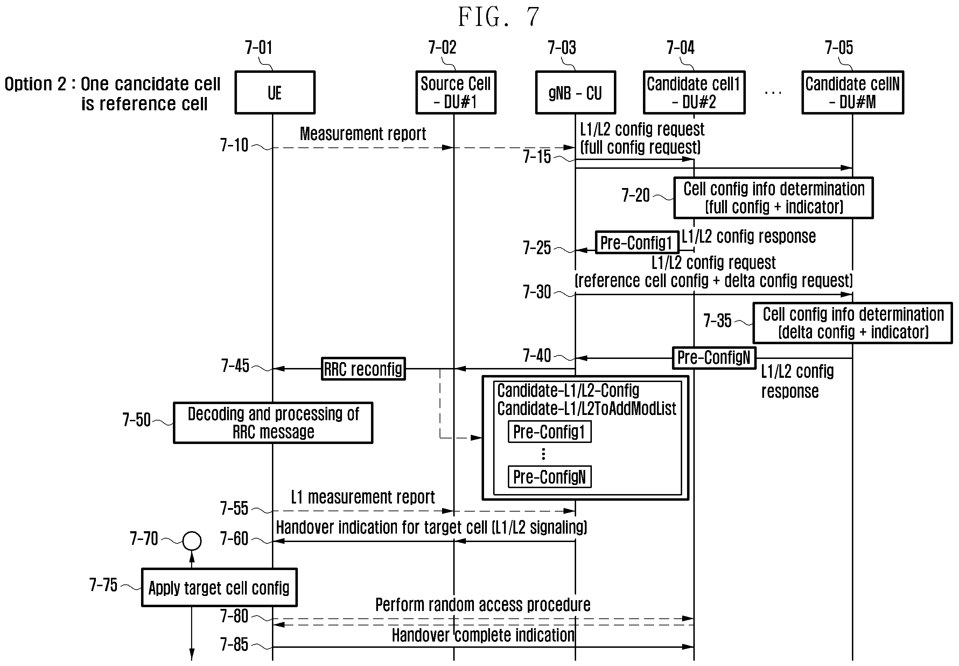

FIG. 7 is a diagram illustrating an overall operation in which one of source neighbor cells is used as configuration information for a reference cell for configuration of neighbor cells for L1/L2-based handover, as an example applied to the disclosure. In particular, the example of FIG. 7 shows the operation in case that the second reference cell configuration method is applied among the above-described methods for defining and transmitting the reference cell configuration.

A UE 7-01 in the RRC connected state performs data transmission and reception with a source cell 1 7-02, and in step 7-10 transmits measurement values for the serving cell and/or neighbor cells to the source cell 1 7-02 according to the configured measurement and report. At this time, the measurement values are actually transmitted to a CU 7-03 of gNB. This is because the gNB CU 7-03 is responsible for RRC message processing and determines mobility. The gNB CU 7-03 generates a message (L1/L2 config request message) requesting configuration information for L1/L2-based handover from one cell 7-04 among neighbor cells 7-04 and 7-05 based on the measurement value report received from the UE 7-01, and transmits the message in step 7-15. The message requesting the configuration information for L1/L2-based handover may be transmitted through an F1 interface. In FIG. 7, the candidate cell is shown as being linked to the DU, but in reality, the candidate cell and the DU may be mapped 1:1, or multiple candidate cells may be included in one DU. In addition, the message requesting the configuration information for the L1/L2-based handover may be an existing handover request message, a UE context request message, a UE context modification request message, etc., or may be a new F1 or Xn message. The message requesting the configuration information for the L1/L2-based handover not only notifies the neighbor cells that they are determined as candidate cells for L1/L2-based handover, but also requests RRC configuration information to be applied in case that the L1/L2-based handover is performed to the corresponding cell. As described above, the RRC configuration information (Pre-Config1, ⊚Pre-ConfigN) applied in case that the L1/L2-based handover is performed may have one of the structures of a cell level, a cell group level, and an RRC message level.

In addition, the example of FIG. 7 is the case where the second reference cell configuration method is applied, and in particular, is characterized in that a full configuration for cell configuration is first requested and received from one neighbor cell, and the corresponding configuration is used as the reference cell configuration. That is, in step 7-15, an indicator requesting the full configuration for cell configuration may be included in a message (L1/L2 config request message) requesting the configuration information for L1/L2-based handover. The neighbor candidate cell 7-04 that has received this generates configuration information for the corresponding cell in case that the L1/L2-based handover is performed, based on the full configuration, in step 7-20. The candidate cell 7-04 transmits a configuration information response message (L1/L2 config response message) for the L1/L2-based handover to the gNB CU 7-03 in step 7-25. The configuration information response message for the L1/L2-based handover may include a full config indicator. The full configuration may be defined as complete configuration.

Thereafter, in step 7-30, the gNB CU 7-03 transmits a message (L1/L2 config request message) requesting the configuration information for the L1/L2-based handover to other candidate neighbor cells 7-05. This message requesting the configuration information for L1/L2-based handover may include an indicator that requests to provide the configuration information for L 1/L2-based handover by applying delta configuration. This message requesting the configuration information for L1/L2-based handover includes the configuration information for the reference cell received in step 7-25.

In step 7-35, the candidate neighbor cells 7-05 that have received the message requesting the configuration information for L1/L2-based handover generate, based on delta configuration, configuration information for each candidate neighbor cell in case that the L1/L2-based handover is applied based on the received configuration information of the reference cell. In step 7-40, each of the candidate neighbor cells 7-05 contains the generated configuration information for L1/L2-based handover in a configuration information response message (L1/L2 config response message) for L1/L2-based handover and transmits it to the gNB CU 7-03.

In step 7-45, the source cell 7-02 receives the RRC message generated by the gNB CU 7-03 and transmits it to the UE 7-01. The RRC message is a message that contains the configuration information (Pre-Config1, ⊚Pre-ConfigN) for candidate neighbor cells to which the L1/L2-based handover is applied. In step 7-50, the UE 7-01 that receives the RRC message performs a procedure for decoding and processing the RRC message. This processing may include ASN.1 decoding and validity determination of the received message and a method for storing and managing the configuration contents.

In step 7-55, the UE 7-01 performs measurement (e.g., L1 measurement) and report for each candidate neighbor cell. The measurement information received by the source cell 7-02 may be transferred to the gNB CU 7-03. The gNB CU 7-03 or the source cell 7-02 that has received the measurement information may determine a handover based on the measurement information. If it is determined that a handover is necessary, the gNB CU 7-03 or the source cell 7-02 indicates an L1/L2 handover to the UE 7-01 in step 7-60. As L1/L2 signaling in step 7-60, MAC CE and/or DCI including a handover indicator may be used. The L1 measurement value transfer for determining the L1/L2 handover and the handover determination in steps 7-55 and 7-60 may be performed by the source cell 7-02 or the source gNB CU 7-03. In the case where the gNB CU 7-03 makes all determinations, the source cell 7-02 transfers the L1 measurement value received from the UE to the gNB CU 7-03, and transfers L1/L2 signaling to the UE 7-01 according to the handover determination of the gNB CU 7-03. However, in the case where the source cell 7-02 makes the final determination, the source cell 7-02 may not transfer the L1 measurement value to the gNB CU 7-03, determines the handover by itself based on a measurement value criteria (threshold value and measurement value range) for making the handover determination for the respective candidate neighbor cells received from the previous gNB, and transfers the L1/L2 signaling to the UE 7-01 according to the handover determination.

In case that the L1/L2 handover indication is transmitted to the UE 7-01, the UE 7-01 starts a handover procedure in step 7-70 and starts a timer for L1/L2 handover. The timer may be a newly configured timer, or the existing T304 timer may be reused. In step 7-75, the UE 7-01 applies the configuration for the target cell to which the L1/L2 handover is applied. This is one of the neighbor cell configurations received previously in step 7-45. In step 7-80, depending on the configuration applied, the UE performs random access for the target cell 7-04 if random access is required, and if random access is not indicated nor required (if uplink synchronization has already been performed or made), the random access procedure is omitted. In step 7-85, the UE 7-01 performs a handover completion procedure with the target cell 7-04. This procedure may vary depending on a method for performing a handover complete indication, and may be a process of transferring an RRCReconfiugrationComplete message in case that the UE 7-01 has received the configuration of the target cell at the RRC message level. However, in case that the UE 7-01 has received the configuration of the target cell at the cell level or cell group level, a new handover complete indication message (new RRC message or MAC CE) may replace this procedure.

Although omitted in FIG. 7, if a change in the reference cell and reference cell configuration is required, the configuration-related operations may be updated with F1 interface messages between the gNB CU and the neighbor cells. Particularly, in the case where the reference cell configuration is changed, the above-described steps 7-15 to 7-45 are repeated to perform the change in the reference cell and reference cell configuration, and the changed configuration information is transmitted to the UE. In addition, although omitted in FIG. 7, new MAC CE and DCI may be introduced to dynamically indicate the candidate neighbor cells to which L 1/L2-based handover is applied, and dynamically indicate valid configuration or release the configuration (release previously transmitted L1/L2-based handover configuration). Alternatively, the related operations may be performed internally by the gNB, and no separate signaling may be transmitted to the UE.

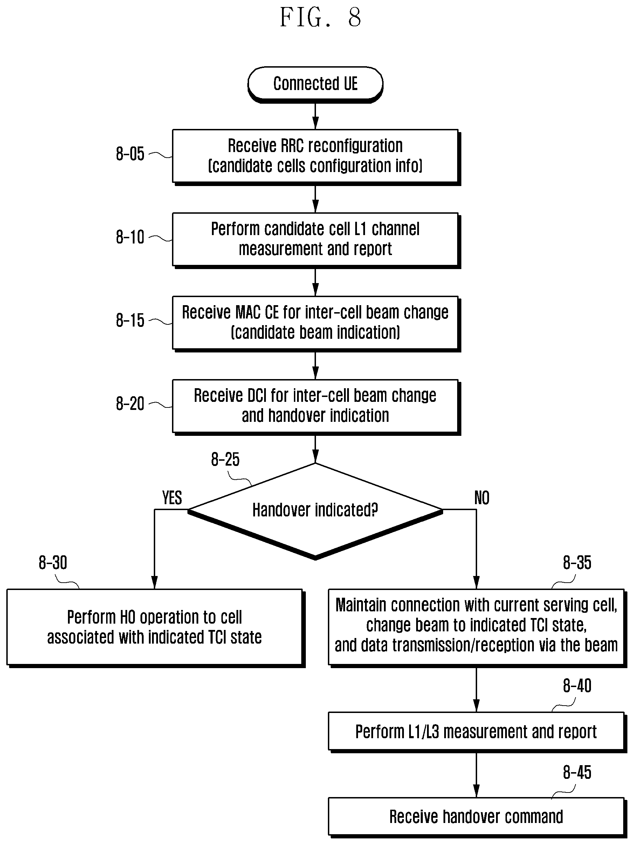

FIG. 8 is a diagram illustrating a UE operation of performing L 1/L2-based beam change and handover, which is applied to embodiments of the disclosure. In particular, the UE operation of the disclosure is characterized by the operation in case that the UE receives, with a delta configuration, configuration information for neighbor cells to be applied after L 1/L2-based handover indication through an RRC configuration.

In step 8-05, the UE in a connected state may receive the configuration information for the neighbor cells to be applied after the L 1/L2-based handover indication through an RRC reconfiguration message from a serving cell. For detailed configuration methods and contents, refer to the description about FIGS. 6 and 7. In addition, although omitted, before RRC configuration information, the UE performs an operation of reporting layer 3 measurement values for the neighbor cells to a base station. In particular, the configuration information for the neighbor cells to be applied after the L1/L2-based handover indication received in step 8-05 is characterized by being transmitted with the delta configuration applied based on configuration for one reference cell. The UE can know what the reference cell and the configuration information for the reference cell are, which are known in advance, or indicated in the RRC configuration. The configuration for neighbor cells other than the reference cell is only for a part that differs from the reference cell according to the delta configuration, so signaling overhead can be reduced.

The UE may decode the received configuration for the neighbor cells based on the reference cell configuration at the corresponding step and then store and manage a configuration to be actually applied in a separate buffer and list (i.e., an operation of storing the configuration delta-configured based on the reference cell as full configurations by referring to the reference cell configuration). Alternatively, the UE may store and manage the received RRC configuration in the buffer as it is, rather than decoding the received configuration based on the reference cell and storing and managing the configuration to be actually applied. The advantage of decoding the configuration for the neighbor cells based on the reference cell at the corresponding step and storing the configuration to be actually applied is that in case that the L1/L2-based handover is actually indicated, the handover for the corresponding cell can be applied immediately, and thus there is no additional delay time.

In steps 8-10, the UE performs L1 measurements related to the candidate neighbor cells while maintaining the connected state with the serving cell, and reports the measurement results to the serving cell according to a preconfigured L1 measurement reporting configuration method.

Based on the received measurement result, the serving cell may determine whether to perform a beam change and handover of the UE. If it is determined that a change to a specific beam of a neighbor cell is necessary rather than a specific beam of the serving cell, the handover and beam change of the UE are indicated through L1/L2 signaling in step 8-15. The L1/L2 signaling is different from the existing operation in that it can also trigger a handover. FIG. 8 shows the case where the L1/L2 signaling is MAC CE and DCI, and a specific beam of the neighbor cell and a serving cell change may be all indicated in the MAC CE (in case that the MAC CE indicates only one beam), or specific multiple beams of the neighbor cell may be indicated in the MAC CE. In step 8-20, the UE receives the DCI. The DCI may indicate a handover with one selected from multiple beams of the neighbor cell activated in the MAC CE. That is, step 8-20 may be omitted. For example, if both beam activation and handover are indicated via the MAC CE, operations via the DCI may be omitted.

In step 8-25, the UE checks whether a handover is indicated from the MAC CE and DCI signaling received in steps 8-15 and 8-20, and performs operation 8-30 or operation 8-35 based on whether a handover is indicated. In the case where the received MAC CE and DCI indicate a handover in step 8-25 (in case that the MAC CE itself indicates a handover or in case that the MAC CE activates multiple beams and the DCI indicates a handover while indicating one of the beams), the UE performs a handover to a cell associated with an indicated TCI state in step 8-30. As the handover is performed, the UE may also apply the configuration for the corresponding target cell, stored as pre-configuration for the neighbor cells received in step 8-05, and transmit/receive data using the indicated beam.

In the case where the received MAC CE and DCI do not indicate a handover in step 8-25 (in case that the MAC CE does not indicate whether to perform a handover or in case that the DCI does not indicate a handover), the UE may maintain the connection with the current serving cell in step 8-35, change a beam to the TCI state of the indicated cell, and transmit/receive data through the corresponding beam. After the beam change, data transmission/reception are performed through a dedicated channel (PDCCH/PDSCH and PUCCH/PUSCH) of the corresponding beam. In step 8-40, the UE performs L1 measurement and report for neighbor cells and a radio resource management (RRM) procedure, i.e., L3 measurement and channel report operations. Through the L1 measurement report or the L3 measurement report of the UE, the serving cell may determine that a handover to a neighbor cell is necessary, and may indicate a handover to the UE, thereby indicating a change of the serving cell. In step 8-45, the UE may receive a handover command via L1/L2 signaling or an RRC message. If the UE that receives the handover command is already performing a beam change to a neighbor cell and performing data transmission and reception to that cell, random access-related operations may be omitted. Based on the handover indication, the UE changes the serving cell and releases the configuration of the previous serving cell.

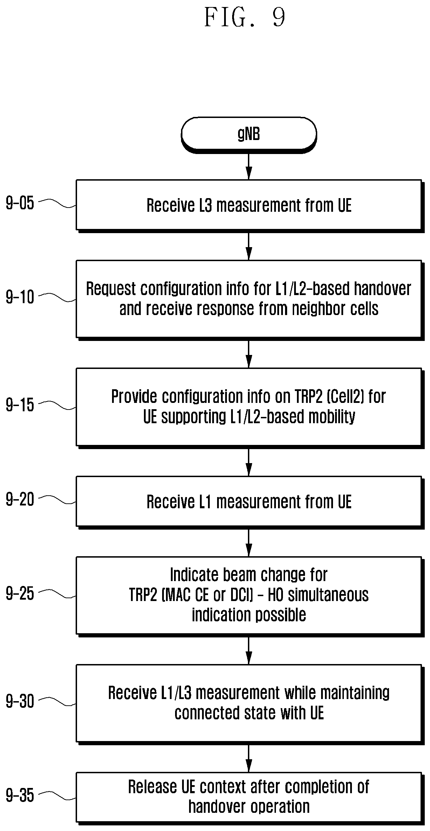

FIG. 9 is a diagram illustrating a base station operation applied to embodiments of the disclosure.

In step 9-05, the base station receives an L3 measurement value report from a UE, and based on the UE's measurement values for neighbor frequencies and cells, determines whether the UE requires a handover and which cells are handover candidate cells. In step 9-10, the base station transmits a request for configuration information for L1/L2-based handover to the neighbor cells and receives a response from the corresponding cells.

The disclosure is characterized in that RRC configuration information is received from the neighbor cells based on delta configuration in this step, and embodiments depend on what the reference cell and reference cell configuration information are. For the message exchange method through the F1 interface, refer to the description of FIGS. 6 and 7 (refer to a procedure of 6-15 to 6-30 and a procedure of 7-15 to 7-45). Through the above process, the base station informs the neighbor cells of the reference cell and the reference cell configuration, and receives configuration information for L1/L2-based handover for other neighbor cells based on the reference cell configuration.

In step 9-15, the base station transmits, to the UE in the connected state, an RRC configuration message generated by including the neighbor cell configuration information received in step 9-10. That is, the base station transmits the configuration information for the neighbor cell to be applied after L1/L2-based handover indication via the RRC reconfiguration message through the serving cell. For detailed configuration methods and contents, refer to the related description of FIGS. 6 and 7 (refer to a procedure of 6-15 to 6-30 and a procedure of 7-15 to 7-45). Through the above process, the base station informs the neighbor cells of the reference cell and the reference cell configuration, receives configuration information for L 1/L2-based handover for other neighbor cells based on the reference cell configuration, and transmits it to the UE.

Next, in step 9-20, the base station receives L1 measurement values from the UE. At this time, the measurement values may be neighbor cells (non-serving cells) that support L1/L2-based mobility. Based on the received measurement results, the serving cell may determine whether to change the beam of the UE. If it is determined that a change to a specific beam of a neighbor cell is necessary rather than a specific beam of the serving cell, the beam change of the UE is indicated through L1/L2 signaling in step 9-25. The L1/L2 signaling may be MAC CE or DCI, and includes information indicating a change to a specific beam of a neighbor cell. In addition, a handover may also be simultaneously indicated through L1/L2 signaling in the corresponding step. The serving cell performs a handover procedure in case that a handover is simultaneously indicated, and deletes UE context and releses the connection in case that the handover with the target cell is completed. It is characterized in that the measurement value for determining the handover in the above is L1 measurement.

If the above L1/L2 signaling does not include a handover procedure, the base station maintains the connected state with the UE in step 9-30. The UE and the base station can perform data transmission and reception through dedicated channels (PDCCH/PDSCH and PUCCH/PUSCH) by applying configuration information for preconfigured neighbor cells. The UE can also return to the current serving cell on the link with a neighbor cell. In step 9-30, the base station may receive an additional L1/L3 measurement report from the UE in the connected state, and based on the measurement information received from the UE, determine that the serving cell requires a handover to a neighbor cell. If a handover to a neighbor cell is required, the base station may transmit a handover message to the UE to indicate a change of the serving cell. In step 9-35, the base station may release the context for the UE after the completion of the handover operation for the UE. If there is a handover indication from the base station, the UE changes the serving cell and releases the configuration of the previous serving cell.

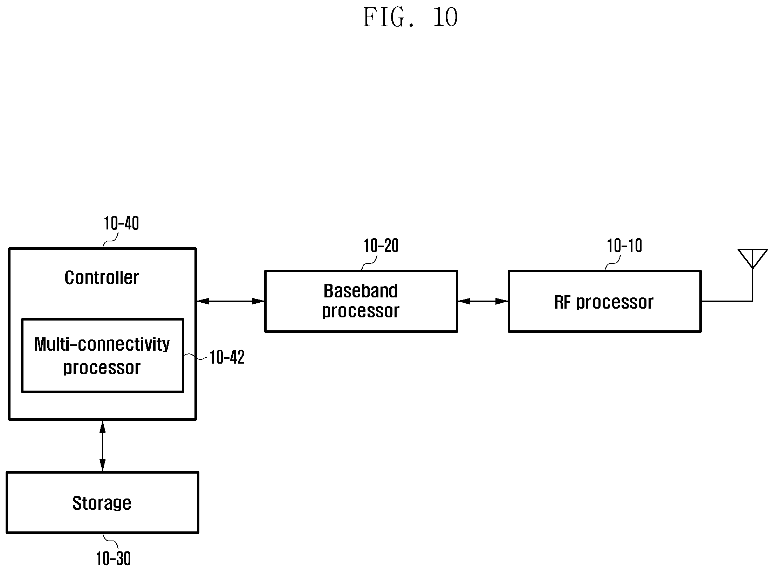

FIG. 10 is a diagram illustrating components of a UE according to various embodiments of the disclosure. With reference to this diagram, the UE includes a radio frequency (RF) processor 10-10, a baseband processor 10-20, a storage 10-30, and a controller 10-40. The controller 10-40 may include a multi-connectivity processor 10-42.

The RF processor 10-10 performs functions for transmitting and receiving signals via radio channels, such as band conversion and amplification of the signals. That is, the RF processor 10-10 up-converts a baseband signal, provided from the baseband processor 10-20, into an RF band signal and then transmits the RF band signal via an antenna, and it down-converts an RF band signal, received via the antenna, into a baseband signal. For example, the RF processor 10-10 may include a transmission filter, a reception filter, an amplifier, a mixer, an oscillator, a digital-to-analog convertor (DAC), an analog-to-digital convertor (ADC), or the like. Although only one antenna is illustrated in FIG. 10, the UE may include a plurality of antennas. Also, the RF processor 10-10 may include a plurality of RF chains. In addition, the RF processor 10-10 may perform beamforming. For the beamforming, the RF processor 10-10 may respectively adjust phases and intensities of signals to be transmitted or received via a plurality of antennas or antenna elements. In addition, the RF processor 10-10 may perform a multi-input multi-output (MIMO) operation and may receive a plurality of layers in the MIMO operation.

The baseband processor 10-20 performs a conversion function between a baseband signal and a bit string in accordance with physical layer specifications of a system. For example, upon data transmission, the baseband processor 10-20 generates complex symbols by encoding and modulating a transmission bit string. Upon data reception, the baseband processor 10-20 restores a received bit string by demodulating and decoding a baseband signal provided from the RF processor 10-10. For example, in the case of complying with an orthogonal frequency division multiplexing (OFDM) scheme, upon data transmission, the baseband processor 10-20 generates complex symbols by encoding and modulating a transmission bit string, maps the complex symbols to subcarriers, and then constructs OFDM symbols by performing inverse fast Fourier transform (IFFT) and cyclic prefix (CP) insertion. Upon data reception, the baseband processor 10-20 segments a baseband signal provided from the RF processor 10-10 into OFDM symbol units, restores signals mapped to subcarriers by performing fast Fourier transform (FFT), and then restores a received bit string by demodulating and decoding the signals.

The baseband processor 10-20 and the RF processor 10-10 transmit and receive signals as described above. Thus, the baseband processor 10-20 and the RF processor 10-10 may be called a transmitter, a receiver, a transceiver, or a communicator. In addition, at least one of the baseband processor 10-20 or the RF processor 10-10 may include a plurality of communication modules to support a plurality of different radio access technologies. Also, at least one of the baseband processor 10-20 or the RF processor 10-10 may include different communication modules to process signals of different frequency bands. For example, the different radio access technologies may include wireless LAN (e.g., IEEE 802.11), cellular network (e.g., LTE), etc. Also, the different frequency bands may include a super-high frequency (SHF) (e.g., 2.NRHz, NRHz) band and a millimeter wave (mmWave) (e.g., 60 GHz) band.

The storage 10-30 stores default programs, application programs, and data, such as configuration information, for operations of the UE. In addition, the storage 10-30 provides the stored data upon request by the controller 10-40.

The controller 10-40 controls the overall operations of the UE according to various embodiments of the disclosure. For example, the controller 10-40 transmits and receives signals through the baseband processor 10-20 and the RF processor 10-10. In addition, the controller 10-40 records and reads data on and from the storage 10-30. To this end, the controller 10-40 may include at least one processor. For example, the controller 10-40 may include a communication processor (CP) performing control for communications and an application processor (AP) controlling an upper layer such as an application program.

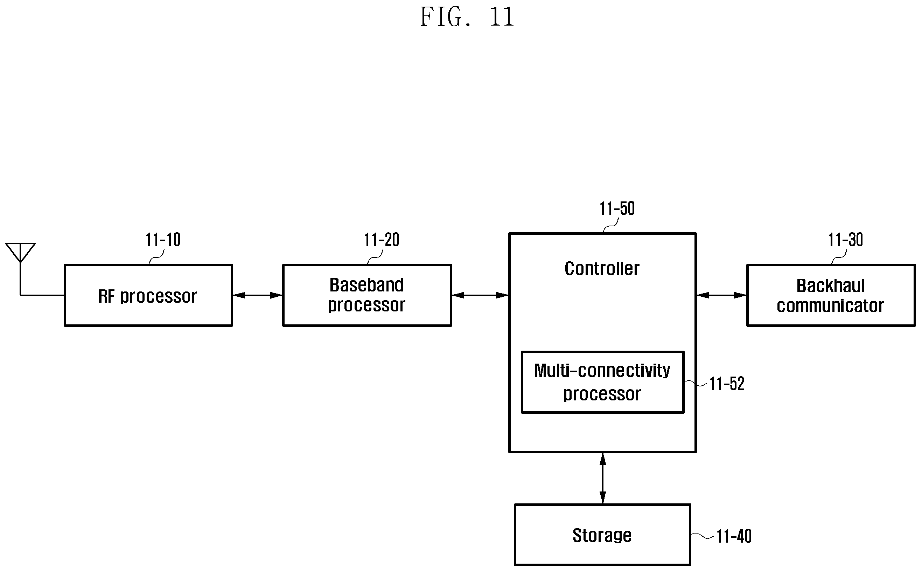

FIG. 11 is a diagram illustrating components of a base station according to various embodiments of the disclosure.

As shown in this diagram, the base station includes a RF processor 11-10, a baseband processor 11-20, a backhaul communicator 11-30, a storage 11-40, and a controller 11-50. The controller 11-50 may include a multi-connectivity processor 11-52.

The RF processor 11-10 performs functions for transmitting and receiving signals via radio channels, such as band conversion and amplification of the signals. That is, the RF processor 11-10 up-converts a baseband signal, provided from the baseband processor 11-20, into an RF band signal and then transmits the RF band signal via an antenna, and it down-converts an RF band signal, received via an antenna, into a baseband signal. For example, the RF processor 11-10 may include a transmission filter, a reception filter, an amplifier, a mixer, an oscillator, a DAC, an ADC, or the like. Although only one antenna is illustrated in FIG. 6, the RF processor 11-10 may include a plurality of antennas. Also, the RF processor 11-10 may include a plurality of RF chains. In addition, the RF processor 11-10 may perform beamforming. For beamforming, the RF processor 11-10 may respectively adjust phases and intensities of signals to be transmitted or received via a plurality of antennas or antenna elements. The RF processor may perform a downlink MIMO operation by transmitting one or more layers.

The baseband processor 11-20 performs a conversion function between a baseband signal and a bit string in accordance with physical layer specifications of a first radio access technology. For example, upon data transmission, the baseband processor 11-20 generates complex symbols by encoding and modulating a transmission bit string. Also, upon data reception, the baseband processor 11-20 restores a received bit string by demodulating and decoding a baseband signal provided from the RF processor 11-10. For example, in the case of complying with the OFDM scheme, upon data transmission, the baseband processor 11-20 generates complex symbols by encoding and modulating a transmission bit string, maps the complex symbols to subcarriers, and then constructs OFDM symbols by performing IFFT and CP insertion. Upon data reception, the baseband processor 11-20 segments a baseband signal provided from the RF processor 11-10 into OFDM symbol units, restores signals mapped to subcarriers by performing FFT, and then restores a received bit string by demodulating and decoding the signals. The baseband processor 11-20 and the RF processor 11-10 transmit and receive signals as described above. Thus, the baseband processor 11-20 and the RF processor 11-10 may be called a transmitter, a receiver, a transceiver, a communicator, or a wireless communicator.

The backhaul communicator 11-30 provides an interface for communicating with other nodes in the network. That is, the backhaul communicator 11-30 converts a bit string transmitted from a main base station to any other node, for example, an auxiliary base station, a core network, etc., into physical signals, and converts physical signals received from such other node into a bit string.

The storage 11-40 stores default programs, application programs, and data, such as configuration information, for operations of the base station. In particular, the storage 11-40 may store, for example, information about bearers assigned for a connected UE, measurement results reported from the connected UE, and the like. Also, the storage 11-40 may store criteria information used to determine whether to provide or release multi-connectivity to or from the UE. In addition, the storage 11-40 provides the stored data upon request by the controller 11-50.

The controller 11-50 controls the overall operations of the base station according to various embodiments of the disclosure. For example, the controller 11-50 transmits and receives signals through the baseband processor 11-20 and the RF processor 11-10 or through the backhaul communicator 11-30. Also, the controller 11-50 records and reads data on and from the storage 11-40. To this end, the controller 11-50 may include at least one processor.

The methods according to embodiments described herein may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Meanwhile, the embodiments of the disclosure disclosed in the description and drawings are only specific examples presented to easily explain the technical contents of the disclosure and help in understanding the disclosure, and are not intended to limit the scope of the disclosure. In other words, it is apparaent to a person having ordinary skill in the art to which the disclosure pertains that other modified examples based on the technical idea of the disclosure are possible. In addition, each of the above embodiments may be combined and operated as needed. For example, parts of one embodiment of the disclosure and parts of another embodiment may be combined to operate a base station and a terminal. In addition, the embodiments of the disclosure may be applied to other communication systems, and other modifications based on the technical ideas of the embodiments may also be implemented.

## Claims

1. A method of a base station of a source cell in a wireless communication system, the method comprising:
receiving measurement information from a terminal;
generating a first message requesting configuration information for layer 1/layer 2 (L1/L2)-based handover, based on the measurement information;
transmitting the first message to a candidate cell for the L1/L2-based handover;
receiving a second message including configuration information of the candidate cell from the candidate cell;
generating a third message including radio resource control (RRC) configuration information for the L1/L2-based handover, based on the configuration information of the candidate cell;
transmitting the third message to the terminal;
receiving measurement information based on L1 measurement from the terminal; and
transmitting an L2 message indicating handover to the candidate cell to the terminal, based on the measurement information based on the L1 measurement,
wherein in case that reference configuration information is included in the first message, the second message includes delta configuration information based on the reference configuration information.

2. The method of claim 1,
wherein in case that the reference configuration information is not included in the first message, the second message includes full configuration information for the candidate cell for the L 1/L2-based handover.

3. The method of claim 1,
wherein the first message is transmitted from a central unit (CU) of the base station to the candidate cell, and the second message is transmitted from the candidate cell to the CU of the base station, and
wherein full configuration information for the candidate cell for the L1/L2-based handover is composed of the reference configuration information and the delta configuration information.

4. The method of claim 1, further comprising:
transmitting a fourth message including new reference configuration information to the candidate cell in case that the reference configuration information is changed; and
receiving a fifth message including new delta configuration information based on the changed reference configuration information from the candidate cell.

5. A method of a terminal in a wireless communication system, the method comprising:
transmitting measurement information to a base station of a source cell;
receiving RRC configuration information for layer 1/layer 2 (L1/L2)-based handover from the base station;
applying the RRC configuration information for the L1/L2-based handover;
transmitting L1 measurement information to the base station based on the RRC configuration information; and
receiving an L2 message indicating handover to a candidate cell from the base station,
wherein in case that the base station uses reference configuration information, the RRC configuration information includes the reference configuration information and delta configuration information of the candidate cell based on the reference configuration information, and
wherein full configuration information for the candidate cell is applied based on the reference configuration information and the delta configuration information.

6. The method of claim 5,
wherein in case that the base station does not use the reference configuration information, the RRC configuration information includes the full configuration information for the candidate cell for the L1/L2-based handover, received by the base station from the candidate cell.

7. A method of a base station of a candidate cell in a wireless communication system, the method comprising:
receiving, from a source cell, a first message requesting configuration information for layer 1/layer 2 (L1/L2)-based handover;
generating a second message including configuration information of the candidate cell based on the first message; and
transmitting the second message to the source cell,
wherein a third message including radio resource control (RRC) configuration information for the L1/L2-based handover, based on the configuration information of the candidate cell, is transmitted to a terminal, and
wherein in case that reference configuration information is included in the first message, the second message includes delta configuration information based on the reference configuration information.

8. The method of claim 7,
wherein in case that the reference configuration information is not included in the first message, the second message includes full configuration information for the candidate cell for the L1/L2-based handover,
wherein the first message is transmitted from a central unit (CU) of a base station of the source cell to the candidate cell, and the second message is transmitted from the candidate cell to the CU, and
wherein the full configuration information for the candidate cell for the L1/L2-based handover is composed of the reference configuration information and the delta configuration information.

9. A base station of a source cell in a wireless communication system, comprising:
a transceiver; and
a controller configured to:
receive measurement information from a terminal,
generate a first message requesting configuration information for layer 1/layer 2 (L 1/L2)-based handover, based on the measurement information,
transmit the first message to a candidate cell for the L1/L2-based handover, receive a second message including configuration information of the candidate cell from the candidate cell,
generate a third message including radio resource control (RRC) configuration information for the L1/L2-based handover, based on the configuration information of the candidate cell,
transmit the third message to the terminal,
receive measurement information based on L1 measurement from the terminal, and
transmit an L2 message indicating handover to the candidate cell to the terminal, based on the measurement information based on the L1 measurement,
wherein in case that reference configuration information is included in the first message, the second message includes delta configuration information based on the reference configuration information.

10. The base station of claim 9,
wherein in case that the reference configuration information is not included in the first message, the second message includes full configuration information for the candidate cell for the L1/L2-based handover,
wherein the first message is transmitted from a central unit (CU) of the base station to the candidate cell, and the second message is transmitted from the candidate cell to the CU of the base station, and
wherein full configuration information for the candidate cell for the L 1/L2-based handover is composed of the reference configuration information and the delta configuration information.

11. The base station of claim 9,
wherein the controller is configured to:
transmit a fourth message including new reference configuration information to the candidate cell in case that the reference configuration information is changed, and
receive a fifth message including new delta configuration information based on the changed reference configuration information from the candidate cell.

12. A terminal in a wireless communication system, comprising:
a transceiver; and
a controller configured to:
transmit measurement information to a base station of a source cell,
receive RRC configuration information for layer 1/layer 2 (L1/L2)-based handover from the base station,
apply the RRC configuration information for the L 1/L2-based handover,
transmit L1 measurement information to the base station based on the RRC configuration information, and
receive an L2 message indicating handover to a candidate cell from the base station,
wherein in case that the base station uses reference configuration information, the RRC configuration information includes the reference configuration information and delta configuration information of the candidate cell based on the reference configuration information, and
wherein full configuration information for the candidate cell is applied based on the reference configuration information and the delta configuration information.

13. The terminal of claim 12,
wherein in case that the base station does not use the reference configuration information, the RRC configuration information includes the full configuration information for the candidate cell for the L1/L2-based handover, received by the base station from the candidate cell.

14. A base station of a candidate cell in a wireless communication system, comprising:
a transceiver; and
a controller configured to:
receive, from a source cell, a first message requesting configuration information for layer 1/layer 2 (L1/L2)-based handover,
generate a second message including configuration information of the candidate cell based on the first message, and
transmit the second message to the source cell,
wherein a third message including radio resource control (RRC) configuration information for the L1/L2-based handover, based on the configuration information of the candidate cell, is transmitted to a terminal, and
wherein in case that reference configuration information is included in the first message, the second message includes delta configuration information based on the reference configuration information.

15. The base station of claim 14,
wherein in case that the reference configuration information is not included in the first message, the second message includes full configuration information for the candidate cell for the L1/L2-based handover,
wherein the first message is transmitted from a central unit (CU) of a base station of the source cell to the candidate cell, and the second message is transmitted from the candidate cell to the CU, and
wherein the full configuration information for the candidate cell for the L1/L2-based handover is composed of the reference configuration information and the delta configuration information.
